# FASCICULE DE BREVET EUROPEEN

(11) **EP 0 443 663 B1**
(45) Date de publication et mention de la délivrance du brevet: **24.08.1994**
(21) Numéro de dépôt: 91200290.4
(22) Date de dépôt: 12.02.1991
(51) Int. Cl.: C08K 5/00, C08L 77/00

(54) **Compositions stabilisées à base de polyamides et objets façonnés à partir de ces compositions**
Stabilisierte Zusammensetzungen auf Polyamidbasis und daraus hergestellte Gegenstände
Stabilised compositions based on polyamides and objects prepared therefrom

(30) Priorité: 23.02.1990 BE 9000211
(43) Date de publication de la demande: 28.08.1991
(73) Titulaire: SOLVAY (Société Anonyme), B-1050 Bruxelles (BE)
(72) Inventeur: Volmer, Sophie, B-1200 Bruxelles (BE); Debecker, Dominique, B-1170 Bruxelles (BE)
(74) Mandataire: Husemann, Claude

(56) Documents cités:
- FR-A- 2 040 089
- FR-A- 2 340 343

## Description

La présente invention concerne des compositions stabilisées à base de polyamides. Elle concerne plus particulièrement des compositions à base de polyamides semi-aromatiques stabilisées contre le vieillissement thermique.

Les polyamides sont des polymères thermoplastiques appréciés pour leurs propriétés mécaniques et diélectriques, pour leur inertie chimique et pour leur résistance aux températures élevées. Le plus souvent renforcés de fibres de verre, ils peuvent être transformés, notamment par moulage par injection, en objets utilisables dans des conditions sévères.

Afin de stabiliser les polyamides contre les dégradations thermo-oxydatives, on a déjà proposé d'y incorporer des phosphites de triaryles symétriques, notamment le tri-(2,4-ditert-butylphényl)phosphite en combinaison avec des anti-oxydants phénoliques (brevet BE-A-851082 de CIBA-GEIGY).

Cette combinaison stabilisante ne s'est pas révélée tout à fait satisfaisante dans la mesure où elle n'empêche pas le vieillissement thermique des objets moulés à long terme, entraînant une détérioration considérable de leur aspect de surface.

L'invention vise à remédier à cet inconvénient et dès lors à fournir des compositions à base de polyamides plus résistantes aux dégradations thermo-oxydatives.

La présente invention concerne à cet effet des compositions stabilisées à base de polyamides (PA) contenant :
(a) un phosphite de triaryle symétrique ;
(b) un amide dérivé d'un acide alkylhydroxyphénylalcanoïque ; et contenant en outre :
(c) une alkylhydroxyphénylalcanoylhydrazine.

Les polyamides (dénommés ci-après PA) contenus dans les compositions stabilisées selon l'invention peuvent être choisis parmi les PA dérivés d'amines aliphatiques, alicycliques et aromatiques, d'une part, et d'acides dicarboxyliques aliphatiques, alicycliques et aromatiques, d'autre part.

Des exemples d'amines utilisables sont l'hexaméthylène diamine, la décaméthylène diamine, la dodécaméthylène diamine, les 2,2,4- et 2,4,4-triméthylhexaméthylène diamines, les 1,3 et 1,4-bis-(aminométhyl)cyclohexanes, le bis(p-aminocyclohexylméthane), la m-xylylène diamine et la p-xylylène diamine.

Des exemples d'acides utilisables sont les acides adipique, subérique, sébacique, glutarique, azélaïque, cyclohexanedicarboxylique, isophtalique et téréphtalique.

Il peut aussi s'agir de PA dérivés d'halogénures acylés ou de diesters alkylés de ces acides, d'acides aminocarboxyliques tels que les acides 6-aminocaproïque, 6-aminocaprylique, 6-aminolaurique, 11-aminoundécanoïque et 12-aminododécanoïque par exemple, ou encore de lactames dérivés de ces acides, tels que le ε-caprolactame et le ω-dodécalactame par exemple.

Ces PA peuvent être dérivés de plus d'une amine ou de plus d'un acide ; des mélanges de PA différents sont aussi utilisables.

Des exemples de PA particuliers utilisables sont le polyhexaméthylène adipamide (nylon 66), le polyhexaméthylène sébacamide (nylon 610), le polycapramide (nylon 6) et le polydodécanamide (nylon 12).

Les PA préférés parce que présentant plusieurs avantages (faible reprise d'eau leur conférant une bonne stabilité dimensionnelle, rigidité élevée, bonne résistance au fluage, bonnes propriétés diélectriques...) sont toutefois les PA semi-aromatiques obtenus par polycondensation de xylylène diamines avec des acides aliphatiques linéaires α, ω-dicarboxyliques contenant de 6 à 12 atomes de carbone et tout particulièrement les PA obtenus par réaction de condensation de m-xylylène diamine avec l'acide adipique (dénommé ci-après PAMXD6).

Le phosphite de triaryle symétrique (a) utilisé dans les compositions selon l'invention est un phosphite organique contenant trois radicaux aryles à substituants identiques. Ces phosphites peuvent être représentés par la formule 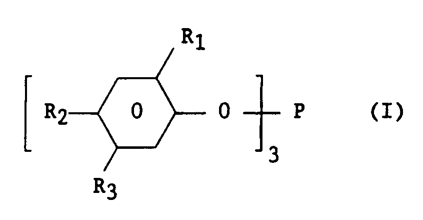
dans laquelle
R₁ représente un radical tert-butyle, 1,1-diméthylpropyle, cyclohexyle ou phényle ;
R₂ et R₃ représentent respectivement, l'un a atome d'hydrogène et l'autre un atome d'hydrogène, un radical méthyle, tert-butyle, 1,1-diméthylpropyle, cyclohexyle ou phényle.

Dans la formule (I) ci-dessus, R₁ est de préférence un radical tert-butyle et R₂ et R₃ sont de préférence respectivement, l'un un atome d'hydrogène et l'autre un atome d'hydrogène, un radical méthyle ou a radical tert-butyle.

A titre d'exemples de phosphites répondant à la formule (I), on peut citer :
- le tri-(2,5-ditert-butylphényle)phosphite
- le tri-(2-tert-butylphényle)phosphite
- le tri-(2-phénylphényle)phosphite
- le tri-[2-(1,1-diméthylpropyl)-phényle]phosphite
- le tri-[2,4-di-(1,1-diméthylpropyl)-phényle]phosphite
- le tri-(2-cyclohexylphényle)phosphite
- le tri-(2-tert-butyl-4-phénylphényle)phosphite
- le tri-(2-tert-butyl-4-méthylphényle)phosphite
- le tri-(2,4-ditert-amylphényle)phosphite et
- le tris-(2,4-ditert-butylphényle)phosphite.

Ces phosphites peuvent être préparés par les procédés connus décrits dans le brevet BE-A-851082, par exemple par réaction du phénol correspondant avec le trichlorure de phosphore en présence d'une base organique ou par réaction avec le phosphite de triphényle en présence d'un catalyseur basique.

Les compositions stabilisées selon l'invention comprennent également un amide (b) dérivé d'acides alkylhydroxyphénylalcanoïques.

Ces amides, provenant des acides susmentionnés et de polyamines, peuvent être représentés par la formule 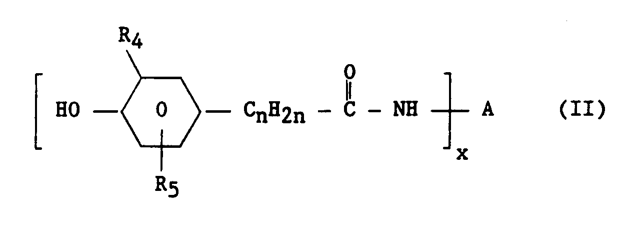
dans laquelle
R₄ représente un radical alkyle à chaîne droite ou ramifiée contenant de 1 à 12 atomes de carbone, par exemple un radical méthyle, éthyle, propyle, butyle, tert-butyle, hexyle, octyle ou décyle ;
R₅ représente un atome d'hydrogène ou un radical alkyle répondant à la même définition que R₄ ;
n est un nombre de 0 à 6 ;
x est un nombre de 2 à 4 ;
A est une chaîne hydrocarbonée polyvalente droite ou ramifiée aliphatique ou cyclique contenant de 1 à 30 atomes de carbone et dont la valeur est égale à x.

A titre d'exemples d'amides répondant à la formule (II), on peut citer ceux dérivant des acides susmentionnés et de polyamines telles que l'éthylène diamine, le 1,3-diaminopropane, le 1,6-diaminohexane, le 1,10-diaminodécane, la 1,1-di(aminométhyl)-éthylamine, le tétra-(aminométhyl)-méthane, le 1,4-diaminométhylcyclohexane et le 1,4-diaminocyclohexane.

Parmi les amides (b) ci-dessus, les amides de l'acide 3-(3,5-di-tert-butyl-4-hydroxyphényl)-propionique sont préférés.

A titre d'exemples d'amides répondant à la formule (II), on peut citer :
- le 1,6-bis[3-(3,5-di-tert-butyl-4-hydroxyphényl)propionamido]hexane ;
- le 1,6-bis[3-(3-méthyl-4-hydroxy-5-tert-butylphényl)propionamido]hexane ;
- le 1,6-bis[3-(3,5-diméthyl-4-hydroxyphényl)propionamido]hexane ;
- le 1,6-bis[alpha-(3,5-di-tert-butyl-4-hydroxyphényl)isobutyramido]hexane ;
- le 1,6-bis(3,5-di-tert-butyl-4-hydroxyphényl-acétamido)hexane ;
- le 1,6-bis[2-(3,5-di-tert-butyl-4-hydroxyphényl)propionamido]hexane ;
- le 1,2-bis[3-(3,5-di-tert-butyl-4-hydroxyphényl)propionamido]éthane ;
- le 1,4-bis[3-(3,5-di-tert-butyl-4-hydroxyphényl)propionamidométhyl]cyclohexane ;
- le 1,4-bis[3-(3,5-di-tert-butyl-4-hydroxyphényl)propionamido]cyclohexane ;
- le 1,2-bis[3-(3,5-di-tert-butyl-4-hydroxyphényl)propionamido]cyclohexane ;
- le tétrakis-[3-(3,5-di-tert-butyl-4-hydroxyphényl)propionamidométhyl]méthane.

Les amides (b) peuvent être préparés par les procédés connus d'amidation mentionnés dans le brevet BE-A-726092 (J.R. GEIGY S.A.), par exemple par chauffage des acides susmentionnés ou d'un de leurs halogénures ou esters alkyliques avec une polyamine dans un solvant organique inerte.

Les compositions stabilisées selon l'invention comprennent aussi une hydrazine (c) qui est une alkylhydroxyphénylalcanoylhydrazine.

Ces hydrazines (c) peuvent être représentées par la formule 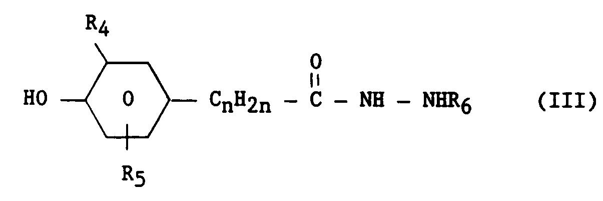
dans laquelle
R₄, R₅ et n ont la signification indiquée plus haut en rapport avec les amides (b) et R₆ représente un atome d'hydrogène, un radical alcanoyle contenant de 2 à 18 atomes de carbone ou un radical de formule 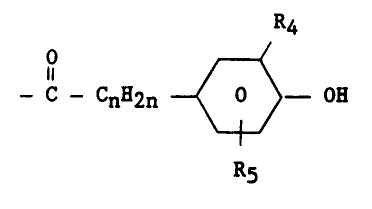
dans laquelle R₄, R₅ et n ont la signification indiquée plus haut.

A titre d'exemples d'hydrazines (c), on peut citer la β-(3,5-di-tert-butyl-4-hydroxyphényl)-propionylhydrazine, la N-stéaroyl-N'-[β-(3,5-di-tert-butyl-4-hydroxyphényl)-propionyl]hydrazine, la N-[β-(3-éthyl-5-tert-butyl-4-hydroxyphényl)propionyl]-N'-[β-(3,5-di-tert-butyl-4-hydroxyphényl)-propionyl]hydrazine, la N-[β-(3,5-di-tert-butyl-4-hydroxyphényl)propionyl]-N'-(3,5-di-tert-butyl-4-hydroxy-benzoyl)-hydrazine, la N-stéaroyl-N'-[β-(3,5-dicyclohexyl-4-hydroxyphényl)-propionyl]hy drazine, la N-octanoyl-N'-[β-(3-méthyl-5-cyclododécyl-4-hydroxyphényl)-propionyl]-hydrazine et la N,N'-bis-β-(3,5-di-tert-butyl-4-hydroxyphényl)-propionylhydrazine.

Les hydrazines (c) peuvent être préparées par les procédés connus mentionnés dans le brevet BE-A-748097 (J.R. GEIGY S.A.), par exemple par réaction entre de l'hydrazine et un ester d'un acide alkylhydroxyphénylalcanoïque ou de l'halogénure d'acide correspondant.

Le mélange stabilisant comprenant le phosphite (a), l'amide (b) et l'hydrazine (c) est incorporé dans les compositions selon l'invention en concentration généralement comprise entre 0,01 et 5 % en poids par rapport au poids de PA qu'elles contiennent. De préférence, ce mélange est incorporé en concentration comprise entre 0,05 et 1 % par rapport au poids de PA, tout particulièrement en concentration comprise entre 0,1 et 0,5 %. Les rapports en poids respectifs entre le phosphite (a), l'amide (b) et l'hydrazine (c) dans le mélange stabilisant sont généralement tels que (a) : (b) : (c) = (1) : (10 à 0,1) : (5 à 0,1), de préférence (1) : (8 à 1) : (4 à 1).
Des rapports typiques entre les constituants respectifs du mélange stabilisant sont (1) : (5 à 1) : (2).

Outre le PA et le mélange stabilisant défini ci-dessus, on peut également incorporer dans les compositions selon l'invention, de manière conventionnelle et dans les quantités habituelles, un ou plusieurs des ingrédients et additifs connus ci-après.

On peut incorporer des agents de renforcement fibreux tels que, par exemple, des fibres de verre, des fibres de carbone, des fibres de carbures ou de borures métalliques, des whiskers, etc. Un agent de renforcement fibreux préféré est constitué par les fibres de verre, éventuellement traitées par des agents de couplage conventionnels. A titre de pareils agents on peut citer les silanes. Des exemples de fibres de verre utilisables sont les fibres de verre commercialisées sous les dénominations VETROTEX® P388, P327, 5145 ; SILENKA® 8087 et 8045 et OCF CS R23DX1 et R17BX1.

Lorsqu'un agent de renforcement fibreux est incorporé dans les compositions selon l'invention, il peut constituer de 10 à 80 % du poids total de ces dernières, et de préférence de 20 à 70 % en poids. Les meilleurs résultats sont enregistrés lorsque l'agent de renforcement fibreux constitue de 35 à 65 % du poids total des compositions.

On peut incorporer d'autres stabilisants connus à la lumière, à la chaleur et à l'oxydation ; des charges inorganiques ; des ignifugeants ; des colorants ; des pigments ; des lubrifiants ; des agents antistatiques ; des agents de démoulage ; des agents facilitant la mise en oeuvre.

On peut aussi incorporer un agent de nucléation conventionnel du PA constitutif des compositions selon l'invention, tel que du talc et des phosphinates de métaux alcalins et alcalino-terreux. Lorsque le PA contenu dans les compositions est le PAMXD6, un agent de nucléation bien connu est le polyhexaméthylène adipamide (nylon 66).

On peut aussi incorporer de manière connue d'autres polymères que le PA dans les compositions selon l'invention. Ces polymères sont généralement choisis parmi les polyesters et les polyoléfines. A titre de polyester typique, on peut citer le poly(éthylène téréphtalate). A titre de polyoléfines, on peut citer les polymères de l'éthylène et du propylène, tout particulièrement les polymères du propylène dont au moins une partie est modifiée par un monomère polaire tel que l'anhydride maléique.

Les compositions stabilisées selon l'invention peuvent être préparées selon toutes les techniques connues assurant un mélange intime et homogène de leurs constituants. Ainsi, on peut mélanger le PA, le mélange stabilisant défini ci-dessus et les éventuels autres ingrédients et additifs à sec, puis les malaxer au fondu. Pour réaliser le mélange à sec, on peut utiliser n'importe quel mélangeur, tels les mélangeurs à ruban, les mélangeurs à tambour, les mélangeurs rapides commercialisés par les firmes HENSCHEL, LOEDIGE, DYOSNA, etc. Pour réaliser le malaxage au fondu, on peut travailler indifféremment en malaxeurs du type externe, ou en malaxeurs du type interne, tels que ceux commercialisés par les firmes TROESTER, BANBURY, etc. Pour des raisons techniques et économiques, on préfère cependant travailler dans des malaxeurs du type interne et plus particulièrement dans des extrudeuses qui constituent une classe particulière de malaxeurs internes.

Les compositions stabilisées selon l'invention sont aptes à la mise en oeuvre par tous les procédés classiques de transformation des matières plastiques, et plus particulièrement par injection. Ces compositions conviennent pour la fabrication de toutes espèces d'objets façonnés et plus particulièrement de pièces injectées.

Les compositions stabilisées selon l'invention présentent une tenue au vieillissement thermique exceptionnelle qui permet d'utiliser les objets façonnés à leur intervention en continu à haute température pendant de très longues périodes, ce qui les rend particulièrement aptes à remplacer des alliages légers dans les industries automobile et aéronautiques notamment.

L'invention est illustrée par les exemples ci-après.

### Exemple 1

On prépare une composition stabilisée par mélange à sec des constituants suivants :
- 440 parties en poids d'un PAMXD6 ;
- 500 parties en poids de fibres de verre commercialisées par VETROTEX® sous la dénomination P327 ;
- 49 parties en poids de nylon 66 (produit MARANYL® A-100 de ICI) ;
- 10 parties en poids de talc ;
- 5 parties en poids de 1,6-bis[3-(3,5-di-tert-butyl-4-hydroxyphényl)propionamido]hexane (amide (b)) commercialisé par CIBA-GEIGY sous la dénomination IRGANOX® 1098 ;
- 2 parties en poids de N,N'-bis[3-(3,5-di-tert-butyl-4-hydroxyphényl)propionyl]hydrazine (hydrazine (c)) commercialisée sous la dénomination IRGANOX® MD 1024
- 1 partie en poids de tri-(2,4-di-tert-butylphényl)phosphite (phosphite (a)) commercialisé par CIBA-GEIGY sous la dénomination IRGAFOS® 168
- 1 partie en poids de stéarate de baryum.

Ce mélange est granulé dans une extrudeuse monovis et les granules transformés par moulage par injection en éprouvettes qui ont été soumises à un test de vieillissement en étuve ventilée à 150°C pendant des temps variables.

La résistance à la dégradation thermooxydative des éprouvettes injectées à partir de la composition ci-dessus a été appréciée par une mesure le leur résistance à la rupture en flexion selon la norme ASTM-D790-80 et aussi par la rugosité des éprouvettes vieillies mesurée selon la norme ISO 4288 et exprimée selon la norme ISO 468.

Les résultats de ces mesures sont rassemblés dans le tableau I ci-après.

**Tableau I**

| Durée du vieillissement (heures) | | | | |
|---|---|---|---|---|
| | 0 | 500 | 1000 | 2000 |
| Contrainte à la rupture (MPa) | 395 | 294 | 297 | 259 |
| Rugosité arithmétique (m») (norme ISO 468 | 0,17 | 0,22 | 0,48 | 0,94 |

### Exemple 2

On reproduit l'exemple 1, sauf que l'on utilise 1 partie en poids de l'amide (b) pour préparer la composition stabilisée.

Les résultats obtenus sont rassemblés au tableau II ci-après.

### Exemples 1R à 3R

Ces exemples sont donnés à titre de comparaison.

Pour la réalisation de l'exemple 1R, on reproduit l'exemple 1, sauf que l'on n'incorpore pas les constituants (a), (b) et (c) dans la composition.

Pour la réalisation de l'exemple 2R, on reproduit l'exemple 2, sauf que l'on n'incorpore pas l'hydrazine (c) dans la composition.

Pour la réalisation de l'exemple 3R, on reproduit l'exemple 2, sauf que l'on n'incorpore pas le phosphite (a) dans la composition.

Les résultats obtenus sont rassemblés au tableau II ci-après.

**Tableau II**

| | Durée du vieillissement (heures) | | | |
|---|---|---|---|---|
| | 0 | 500 | 1000 | 2000 |
| Exemple 2 | | | | |
| Contrainte à la rupture (C.R.) (MPa) | 391 | 295 | 287 | 238 |
| Rugosité arithmétique (Ra) (m») | 0,14 | 0,47 | 1,50 | 2,46 |

| Exemple 1R | | | | |
|---|---|---|---|---|
| C.R. (MPa) | 365 | 316 | 276 | 174 |
| Ra (M») | 0,30 | 1,84 | 3,62 | 5,34 |

| Exemple 2R | | | | |
|---|---|---|---|---|
| C.R. (MPa) | 351 | 258 | 207 | 150 |
| Ra (M») | 0,43 | 1,76 | 3,23 | 6,58 |

| Exemple 3R | | | | |
|---|---|---|---|---|
| C.R. (MPa) | 372 | 296 | 286 | |
| Ra (M») | 0,44 | 0,45 | 1,05 | 4,02 |

Ces résultats montrent clairement l'amélioration surprenante de la résistance à long terme des compositions selon l'invention aux dégradations thermooxydatives, (reflétée par les valeurs nettement plus élevées de contrainte à la rupture et par le plus bel état de surface (valeur de Ra)).

## Revendications

1. Compositions stabilisées à base de polyamides contenant
(a) un phosphite de triaryle symétrique ;
(b) un amide dérivé d'un acide alkylhydroxyphénylalcanoïque ; caractérisées en ce qu'elles contiennent en outre :
(c) une alkylhydroxyphénylalcanoylhydrazine.

2. Compositions stabilisées selon la revendication 1, caractérisées en ce que le polyamide comprend un produit obtenu par polycondensation de xylylène diamines avec des acides aliphatiques linéaires α, ω-dicarboxyliques contenant de 6 à 12 atomes de carbone.

3. Compositions stabilisées selon la revendication 1, ou 2 caractérisées en ce que le phosphite (a) répond à la formule 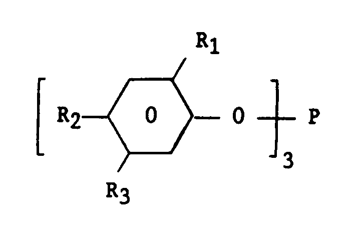 dans laquelle
R₁ représente un radical tert-butyle, 1,1-diméthylpropyle, cyclohexyle ou phényle ;
R₂ et R₃ représentent respectivement, l'un un atome d'hydrogène et l'autre un atome d'hydrogène, un radical méthyle, tert-butyle, 1,1-diméthylpropyle, cyclohexyle ou phényle.

4. Compositions stabilisées selon la revendication 3, caractérisées en ce que le phosphite (a) est le tri-(2,4-di-tert-butylphényl)phosphite.

5. Compositions stabilisées selon l'une quelconque des revendications 1 à 4, caractérisées en ce que l'amide (b) répond à la formule 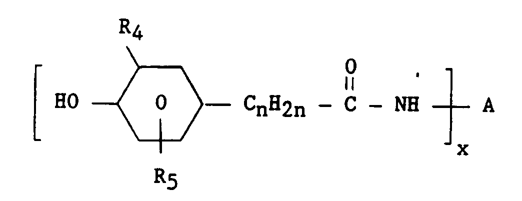 dans laquelle
R₄ représente un radical alkyle à chaîne droite ou ramifiée contenant de 1 à 12 atomes de carbone, par exemple un radical méthyle, éthyle, propyle, butyle, tert-butyle, hexyle, octyle ou décyle ;
R₅ représente un atome d'hydrogène ou un radical alkyle répondant à la même définition que R₄ ;
n est un nombre de 0 à 6 ;
x est un nombre de 2 à 4 ;
A est une chaîne hydrocarbonée polyvalente droite ou ramifiée aliphatique ou cyclique contenant de 1 à 30 atomes de carbone et dont la valeur est égale à x.

6. Compositions stabilisées selon la revendication 5 caractérisées en ce que l'amide (b) est le 1,6-bis[3-(3,5-di-tert-butyl-4-hydroxyphényl)propionamido]hexane.

7. Compositions stabilisées selon l'une quelconque des revendications 1 à 6, caractérisées en ce que l'hydrazine (c) répond à la formule 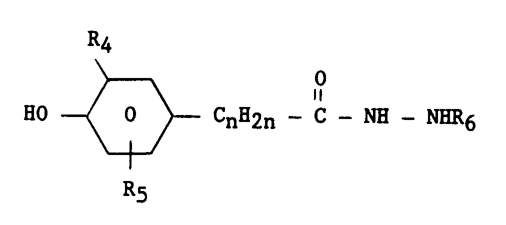 dans laquelle
R₄, R₅ et n ont la signification indiquée plus haut en rapport avec les amides (b) et R₆ représente un atome d'hydrogène, un radical alcanoyle contenant de 2 à 18 atomes de carbone ou un radical de formule 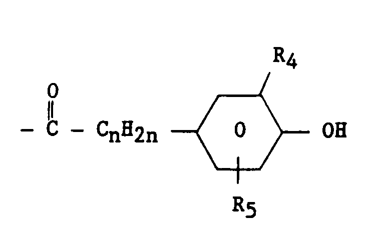 dans laquelle R₄, R₅ et n ont la signification indiquée plus haut.

8. Compositions stabilisées selon la revendication 7, caractérisées en ce que l'hydrazine (c) est la N,N'-bis[β-(3,5-di- tert-butyl-4-hydroxyphényl)propionyl]hydrazine.

9. Compositions stabilisées selon l'une quelconque des revendications 1 à 8, caractérisées en ce qu'elles contiennent en outre un agent de renforcement fibreux.

10. Objets façonnés à partir des compositions selon l'une quelconque des revendications 1 à 9.

## Claims

1. Stabilized compositions based on polyamides containing
(a) a symmetrical triaryl phosphite,
(b) an amide derived from an alkylhydroxyphenylalkanoic acid; characterized in that they also contain:
(c) an alkylhydroxyphenylalkanoylhydrazine.

2. Stabilized compositions according to Claim 1, characterized in that the polyamide comprises a product obtained by polycondensation of xylylenediamines with α,ω-dicarboxylic linear aliphatic acids containing from 6 to 12 carbon atoms.

3. Stabilized compositions according to Claim 1 or 2, characterized in that the phosphite (a) corresponds to the formula 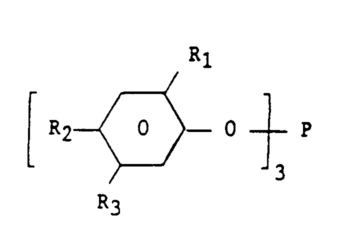 in which
R₁ denotes a tert-butyl, 1,1-dimethylpropyl, cyclohexyl or phenyl radical,
R₂ and R₃ denote, respectively, one a hydrogen atom and the other a hydrogen atom or a methyl, tert-butyl, 1,1-dimethylpropyl, cyclohexyl or phenyl radical.

4. Stabilized compositions according to Claim 3, characterized in that the phosphite (a) is tri(2,4-di-tert-butylphenyl) phosphite.

5. Stabilized compositions according to any one of Claims 1 to 4, characterized in that the amide (b) corresponds to the formula 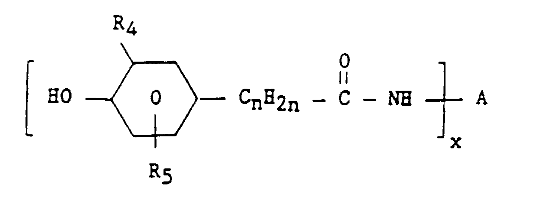 in which
R₄ denotes an alkyl radical with a straight or branched chain containing from 1 to 12 carbon atoms, for example a methyl, ethyl, propyl, butyl, tert-butyl, hexyl, octyl or decyl radical,
R₅ denotes a hydrogen atom or an alkyl radical corresponding to the same definition as R₄,
n is a number from 0 to 6,
x is a number from 2 to 4,
A is an aliphatic or cyclic, straight or branched polyvalent hydrocarbon chain containing from 1 to 30 carbon atoms and whose value is equal to x.

6. Stabilized compositions according to Claim 5, characterized in that the amide (b) is 1,6-bis[3-(3,5-di-tert-butyl-4-hydroxyphenyl)propionamido]hexane.

7. Stabilized compositions according to any one of Claims 1 to 6, characterized in that the hydrazine (c) corresponds to the formula 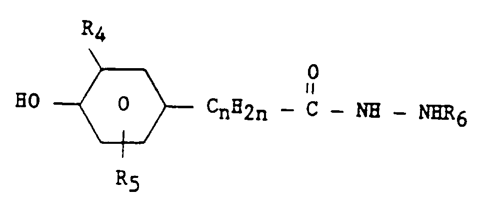 in which
R₄, R₅ and n have the meaning shown above in relation to the amides (b) and R₆ denotes a hydrogen atom, an alkanoyl radical containing from 2 to 18 carbon atoms or a radical of formula 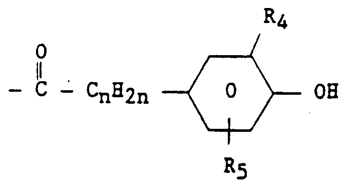 in which R₄, R₅ and n have the meaning shown above.

8. Stabilized compositions according to Claim 7, characterized in that the hydrazine (c) is N,N'-bis[β-(3,5-di-tert-butyl-4-hydroxyphenyl)propionyl]hydrazine.

9. Stabilized compositions according to any one of Claims 1 to 8, characterized in that they additionally contain a fibrous reinforcing agent.

10. Objects manufactured from the compositions according to any one of Claims 1 to 9.

## Patentansprüche

1. Stabilisierte Zusammensetzungen auf Polyamidbasis, die
(a) ein symmetrisches Triarylphosphit
(b) ein von einer Alkylhydroxyphenylalkancarbonsäure abgeleitetes Amid enthalten, dadurch gekennzeichnet, daß sie außerdem:
(c) ein Alkylhydroxyphenylalkanoylhydrazin enthalten.

2. Stabilisierte Zusammensetzungen nach Anspruch 1, dadurch gekennzeichnet, daß das Polyamid ein Produkt umfaßt, das durch Polykondensation von Xylylendiaminen mit linearen, aliphatischen α, ω -Dicarbonsäuren mit 6 bis 12 Kohlenstoffatomen erhalten wurde.

3. Stabilisierte Zusammensetzungen nach Anspruch 1 oder 2, dadurch gekennzeichnet, daß das Phosphit (a) der Formel 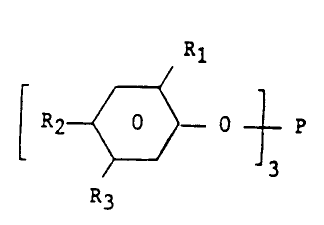 entspricht, in der
R₁ einen tert-Butyl-, 1,1-Dimethylpropyl-, Cyclohexyl- oder Phenylrest darstellt;
R₂ und R₃ jeweils eines ein Wasserstoffatom und das andere ein Wasserstoffatom, einen Methyl-, tert-Butyl-, 1,1-Dimethylpropyl, Cyclohexyl- oder Phenylrest darstellt.

4. Stabilisierte Zusammensetzungen nach Anspruch 3, dadurch gekennzeichnet, daß das Phosphit (a) das Tri-(2,4-di-tert-butylphenyl)phosphit ist.

5. Stabilisierte Zusammensetzungen nach einem der Ansprüche 1 bis 4, dadurch gekennzeichnet, daß das Amid (b) der Formel 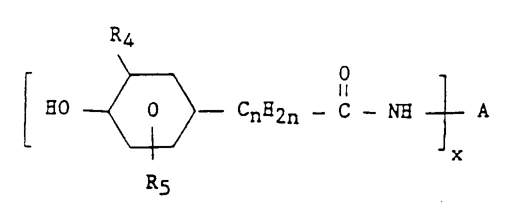 entspricht, in der
R₄ einen geradkettigen oder verzweigten Alkylrest mit 1 bis 12 Kohlenstoffatomen, beispielsweise einen Methyl-, Ethyl-, Propyl-, Butyl-, tert-Butyl-, Hexyl-, Octyl- oder Decylrest darstellt;
R₅ ein Wasserstoffatom oder einen Alkylrest, der derselben Definition wie R₄ entspricht, darstellt;
n eine Zahl von 0 bis 6 ist;
x eine Zahl von 2 bis 4 ist;
A eine mehrwertigte, gerade oder verzweigte, aliphatische oder zyklische Kohlenwasserstoffkette mit 1 bis 30 Kohlenstoffatomen ist und deren Wert gleich x ist.

6. Stabilisierte Zusammensetzungen nach Anspruch 5, dadurch gekennzeichnet, daß das Amid (b) das 1,6-Bis[3-(3,5-di-tert-butyl-4-hydroxyphenyl)propionamido]hexan ist.

7. Stabilisierte Zusammensetzungen nach einem der Ansprüche 1 bis 6, dadurch gekennzeichnet, daß das Hydrazin (c) der Formel 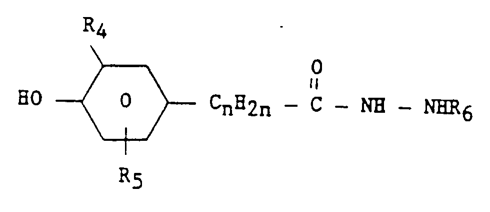 entspricht, in der
R₄, R₅ und n die oben unter Bezug auf die Amide (b) genannte Bedeutung haben und R₆ ein Wasserstoffatom, einen Alkanoylrest mit 2 bis 18 Kohlenstoffatomen oder einen Rest der Formel 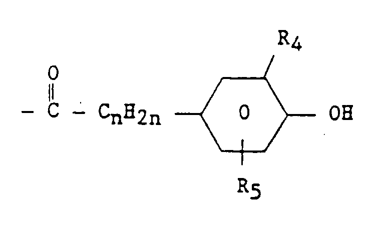 darstellt, in der R₄, R₅ und n die oben genannte Bedeutung haben.

8. Stabilisierte Zusammensetzungen nach Anspruch 7, dadurch gekennzeichnet, daß das Hydrazin (c) das N,N'-bis[β-(3,5-di-tert-butyl-4-hydroxyphenyl)propionyl]hydrazin ist.

9. Stabilisierte Zusammensetzungen nach einem der Ansprüche 1 bis 8, dadurch gekennzeichnet, daß sie außerdem ein faserförmiges Verstärkungsmittel enthalten.

10. Aus diesen Zusammensetzungen nach einem der Ansprüche 1 bis 9 hergestellte Gegenstände.
